# EUROPEAN PATENT APPLICATION

(11) **EP 0 818 916 A2**
(43) Date of publication of application: **14.01.1998**
(21) Application number: 97111655.3
(22) Date of filing: 09.07.1997
(51) Int. Cl.: H04N 1/00, H04N 1/32, H04N 1/333

(54) **Communication terminal device**

(30) Priority: 12.07.1996 JP 183587/96
(71) Applicant: Murata Kikai Kabushiki Kaisha, Minami-ku, Kyoto-shi, Kyoto (JP)
(72) Inventor: Kumano, Toshiya, Murata Kikai Shataku B-606, Uji-shi, Kyoto (JP); Yasumoto, Hiroyuki, Murata Kikai Shataku B-606, Uji-shi, Kyoto (JP)
(74) Representative: Liedl, Christine, Dipl.-Chem.

(57) **Abstract**

An electronic mail generally includes a header information and a main part information. The communication terminal device(T) of the present invention is provided with functions of receiving electronic mail from computer network and determines the encoding method and data type of the main part information by analyzing the header information of the received electronic mail. When the device(T) has determined that it cannot process the received electronic mail by itself, it notifies as such to the user and then transfers the electronic mail to another predetermined communication terminal device such that the mail can be further processed there.

## Description

### BACKGROUND OF THE INVENTION

### Technical Field

The present invention relates to a communication terminal device having electronic mail transmission/reception functions and more particularly, to a facsimile device or the like that is capable of transmission and reception of electronic mail by connection to a computer communication network such as the internet or the like.

### Background Art

Among communication terminal devices, there are types of facsimile devices that connect to analog lines and types of devices that connect to digital lines. The former are generally G3 devices where the later are generally G4 devices. However, it is general for a G4 device to be provided with functions that also make it perform as a G3 device.

Recently, the use of computer communication networks such as the internet or the like has become widespread. The excellent error correction functions of computer networks and the fact that communication between computers not only domestically but worldwide is possible by the user only bearing the communication charges to the nearest contract provider (company that provides connection to the computer communication network) may be given as reasons for this.

However, as the communication procedures of conventional G3 and G4 facsimiles differ from those of computer communication utilizing a computer communication network as described above, the direct communication from a facsimile device to a computer network is impossible. However, image data transmitted or received by normal facsimile communication can be transmitted/received as an electronic mail via a computer communication network if the data is converted to data of an electronic mail format such as a TIFF (Tagged Image File Format) file or the like.

However, on a communication terminal device that not only works as a facsimile device but also has a function which allows image data transmitted/received by normal facsimile communication to be transmitted/received as an electronic mail via a computer communication network by converting the image data to the data of electronic mail format, as decoding and reproduction of the received data is possible only when the original facsimile image data has been encoded by a specific encoding format, if electronic mail of other encoding formats is received from the computer communication network, that data can not be processed nor the original contents displayed.

### SUMMARY OF THE INVENTION

With regard to the situation as described above, it is an object of the present invention to propose a communication terminal device that determines whether it is able to process and display or print out the original contents of received electronic mail from information included in the communication control information (usually known as the header) of the electronic mail.

The communication terminal device of the present invention is provided with electronic mail reception means that receives electronic mail having a main part of encoded image data and communication control information including at least information relating to that encoding method, and encoding format determination means that determines the encoding format of the main part from the communication control information of the received electronic mail.

Furthermore, the communication terminal device of the present invention is further provided with notification means for, when the encoding format determination means determines that the main body of the electronic mail received by the electronic mail reception means has been encoded by a format that the device is not able to process, displaying or printing out that result.

Yet further, the communication terminal device of the present invention is provided with memory means and electronic mail transfer means, the memory means temporarily memorizing an electronic mail and the electronic mail transfer means transferring the mail to a pre-specified other communication terminal device when the encoding format determination means determines that the main body of the electronic mail received by the electronic mail reception means has been encoded by a format that the device is not able to process.

Accordingly, on a communication terminal device of the present invention as above, in the case where the main body of the electronic mail received by the reception means has been determined to be electronic mail encoded by an encoding format that the device is not able to process, that fact is notified thus the user is able to take appropriate steps such as re-requesting transmission by normal facsimile communication or the like.

Furthermore, on a communication terminal device of the present invention as above, in the case where the main body of the electronic mail received by the reception means has been determined to be electronic mail encoded by an encoding format that the device is not able to process, as that electronic mail is automatically transferred to another pre-specified communication terminal device for processing, the probability that the electronic mail is correctly processed is increased.

That is, when the image data transmitted/received by normal facsimile communication is converted to electronic mail format data and transmitted/received via computer communication network, since the communication terminal device T of the present invention determines whether received electronic mail may be processed and the original contents can be displayed or not based on information included in the header part of the electronic mail, if the communication terminal device T receives electronic mail of an encoding format which can be received but not processed, the device T makes such determination as above after it once received the data and then may transfer the data to other computers etc. for further processing.

### BRIEF DESCRIPTION OF THE DRAWINGS

Figure 1 is a block diagram showing the hardware arrangement of the communication terminal device of the present invention.

Figure 2 is a block diagram schematically showing the flow of data and the functional arrangement of the communication terminal device of the present invention.

Figure 3 is a schematic drawing showing examples of contents of the third party table.

Figure 4 is a schematic drawing showing examples of contents of the user (sender) table.

Figure 5 is a schematic drawing showing examples of contents of the provider table.

Figure 6(A) and Figure 6(B) are schematic drawings showing examples of contents of the encoding format tables.

Figure 7 is a schematic drawing showing examples of contents of the transfer destination table.

Figure 8 is a time chart showing the log-in procedures to a server by the communication terminal device of the present invention.

Figure 9 is a time chart showing the communication procedures for sending electronic mail to the internet by the communication terminal device of the present invention.

Figure 10 is a flowchart showing the operation procedures of the communication terminal device of the present invention at times of electronic mail transmission.

Figure 11 is another flow chart showing the operation procedures of the communication terminal device of the present invention at times of electronic mail transmission.

Figure 12 is yet another flow chart showing the operation procedures of the communication terminal device of the present invention at times of electronic mail transmission.

Figure 13 is a schematic drawing showing one example of contents of the header of electronic mail transmitted by the communication terminal device of the present invention.

Figure 14 is a schematic drawing showing one example of an electronic mail transmission report transmitted to third party after transmission of an electronic mail by the communication terminal device of the present invention.

Figure 15 is a flowchart showing the operation procedures of the communication terminal device of the present invention at times of electronic mail reception.

### DESCRIPTION OF THE PREFERRED EMBODIMENTS

Hereafter, an embodiment of the present invention will be described based on the drawings. In the embodiment described below, the present invention is applied to a communication terminal device constructed such that it can transmit/receive image data normally sent by facsimile communication as electronic mail. Furthermore, the internet is used as the computer communication network in the embodiment.

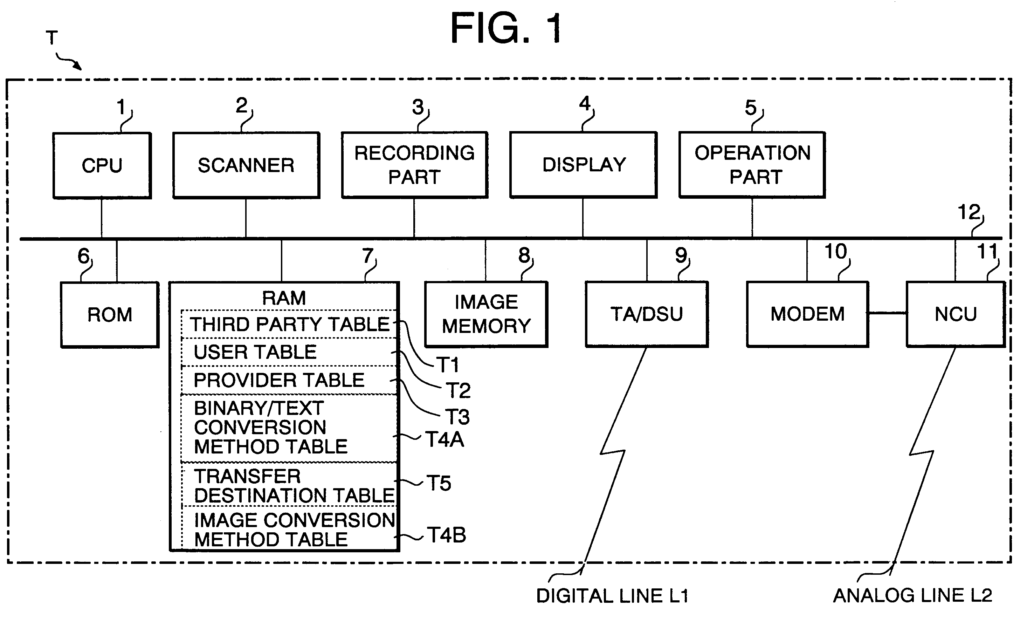

Firstly, the hardware arrangement of a communication terminal device T of the present invention will be described with reference to Fig.1. The communication terminal device T of the present invention is provided with functions for communication (transmission and reception) with the internet in addition to G3 and G4 facsimile communication functions.

A CPU 1 controls each part of the hardware via a bus 12 and it 1 also executes software functions such as encoding, decoding, image (TIFF) conversion, binary-text conversion, mail editing, communication procedures and the like (described later).

A scanner 2 scans a document by a scanner using a CCD or the like and outputs dot image data converted to a bilevel image. Recording part 3 is provided with a printer such as an electro-photographic type and reproduces as a hard copy and records image data received from another G3 or G4 facsimile device by facsimile communication or image data received from the internet.

Display 4 is provided with display means such as a liquid crystal display (LCD) or CRT display or the like, and displays the operating status of the communication terminal device T of the present invention, performs the input instruction display by a touch panel method during operation, and displays the image data of the document to be transmitted and the received image data.

Operation part 5 is provided with letter keys, a key pad (number keys), quick dial keys, one-touch dial keys, various types of function keys and the like necessary for operation of the communication terminal device T of the present invention. It should be noted that it is also possible to substitute some of the keys of the operation part 5 by having the aforementioned display part 4 as a touch panel type.

A ROM 6 is pre-stored with each type of software programs necessary for operation of the communication terminal device T of the present invention. A RAM 7 includes SRAM or a flash memory or the like and apart from memorizing temporary data generated when the software is executed, memorizes each type of table to be described later. It should be noted that when a flash memory is used in the RAM 7, the contents of each type of table do not disappear even when the power supply is cut because of power failures, moving the device to another location and the like. An image memory 8 includes a DRAM or the like and memorizes the image data to be transmitted and the received image data.

A TA/DSU (Terminal Adaptor/Digital Service Unit) 9 performs the conversion of transmission/reception data and voltage so that the device can be connected to digital lines L1 using a baseband transmission format. In this example, a modem 10 is provided with data modem functions as well as conventional fax modem functions. An NCU (Network Control Unit) 11 performs the operations of connecting and releasing the analog lines L2.

The communication terminal device T of the present invention has the hardware structure as described above and while obviously having functions of a normal G3/G4 device, may also transmit and receive image data converted to a TIFF file as electronic mail. The functions for that extra purpose are stored in the ROM 6 as software programs and will be described hereafter.

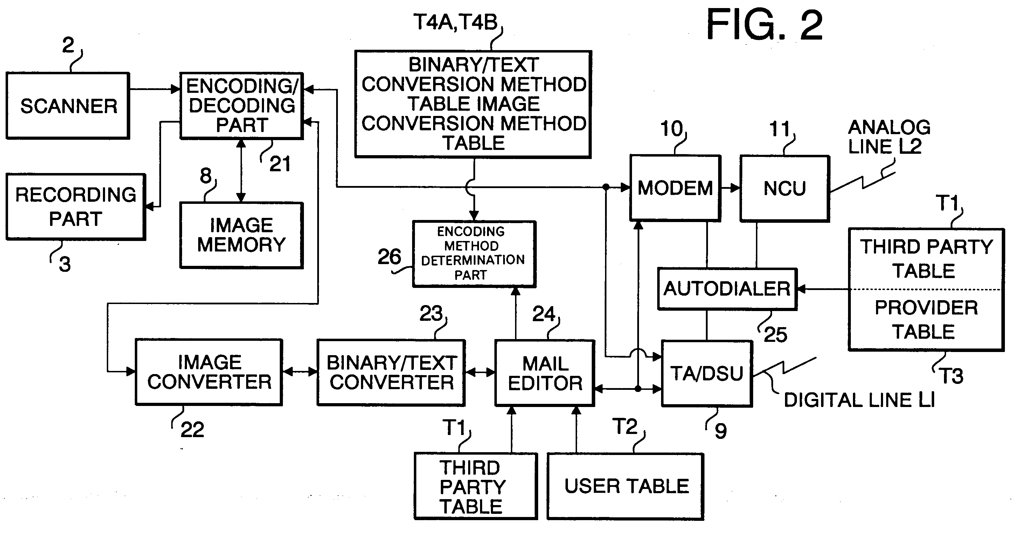

Fig.2 is a block drawing schematically showing the flow of data and the functional arrangement of the communication terminal device of the present invention. It should be noted that the parts corresponding to Fig.1 (hardware elements) are labeled with the same reference number. In addition to those seen in Fig. 1, each block of the encoding/decoding part 21, image converter 22, binary/text converter 23, mail editor 24 and autodialer 25 to which no corresponding reference number is attached in Fig. 1 are provided as functional blocks where processing is performed by the CPU 1 in accordance with software programs pre-stored in the ROM 6(the details of each will be described later).

Encoding/decoding part 21 encodes dot image data scanned by the scanner 2 by coding methods such as MH, MR, MMR or the like determined as facsimile communication standards, or decodes encoded image data received from an external device and outputs this to the recording part 3 as a hard copy. Hereafter, the image data encoded by this kind of encoding method will be known as "G3 format image data". It should be noted that the image memory 8 memorizes G3 format image data transmitted from the encoding/decoding part 21 and in reverse, sends memorized G3 format image data to the encoding/decoding part 21.

At times of transmission, image converter 22 converts the G3 format image data to a TIFF (Tagged Image File Format) format being an image format generally used by computers and at times of reception, performs conversion from the TIFF format to G3 format image data. It should be noted that the TIFF specifications were made public by Adobe Systems and for each data type such as bilevel, grey scale, full color and the like, a corresponding TIFF class is defined respectively for data handling. Class F being one of these classes defines G3 format image data. Accordingly, conversion of G3 format image data to TIFF format is possible by the relatively simple processing such as attaching Class F TIFF header information to the start of the G3 format image data. Hereafter, the G3 format image data to which Class F TIFF header information has been attached is called "TIFF image data".

At times of transmission, the binary/text converter 23 converts the binary data of the TIFF image data obtained from the image converter 22 to text data and at times of reception, performs the reverse, in short, converts text data to binary data. This is because there are computers on the internet which can not handle electronic mail of binary data. In order to reliably deliver electronic mail to a third party, the binary data of TIFF image data or the like is first converted to text data when it is to be transmitted. It should be noted that in RFC (Request For Comments) 822 being a document published by IETF (Internet Engineering Task Force), text data handled by the internet is standardized as a 7 bit code.

If conversion to text data is performed using base 64 being one encoding type of MIME (Multipurpose Internet Mail Extensions) as an example, the binary data is converted to text data by the replacement with one of 64 characters (large and small letters of the alphabet, numerals, +,/) in 6 bit units. It should be noted that the standards relating to MIME are set by the aforementioned RFC and apart from the abovementioned base 64, "7 bit", "8 bit", "binary" and other encoding types have been defined.

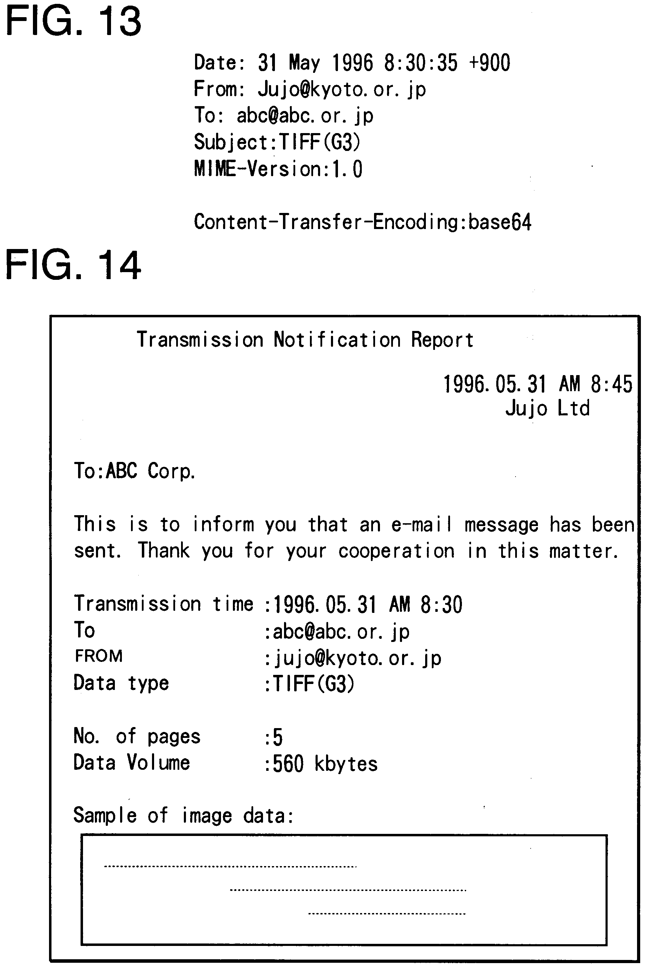

The mail editor 24 adjusts the file to be transmitted to an electronic mail format or, in reverse, divide the received electronic mail into the main body and the communication management information (mail header), then only taking out the TIFF image data(the main body). In actuality, at times of transmission, the mail editor 24 edits the data to an electronic mail format by adding mail header information as communication management information to the TIFF image data converted to text data. At times of reception, the mail editor 24 takes out only the TIFF image data converted to text data by separating the mail header from the electronic mail format data. These kind of operations by the mail editor 24 are indispensable as the attachment of predetermined header information is necessary for internet electronic mail and at times of transmission, header information including "Date:" (that electronic mail's transmission date and time), "From:" (the sender of that electronic mail), "To:" (the address for that electronic mail), "Subject:" (the subject of that electronic mail. However in the communication terminal device T of the present information, is image conversion method), "MIME:", "Content-Transfer-Encoding:" (the binary text conversion method of that electronic mail) and the like, is attached to the head of the TIFF image data as shown in Fig.13 and at times of reception, these header information parts are separated.

It should be noted that at times of reception, header information separated by the mail editor 24 is sent to the encoding method determination part 26 and determination is performed whether processing is possible by a binary text conversion method table T4A and image conversion method table T4B which will be described later.

Autodialer 25 sends third party telephone number data to the TA/DSU 9, modem 10 or NCU 11 in order to dial the telephone number read from the third party table T1 or the provider table T3 existing in the RAM 7 as hardware or to call the telephone number read from the transfer destination table T5.

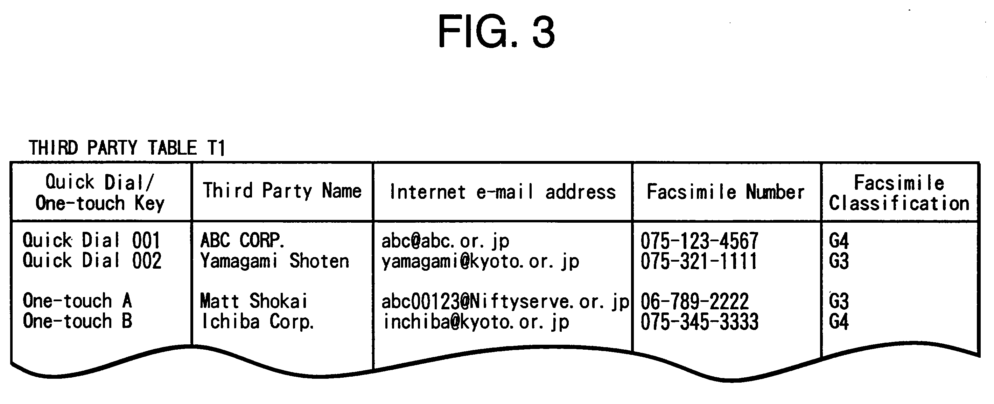

Hereafter, each type of table will be described. As shown in Fig.3, the third party table T1 records the third party name, internet e-mail address, facsimile number and facsimile classification (G3 or G4) for each of quick dial keys or one-touch dial keys.

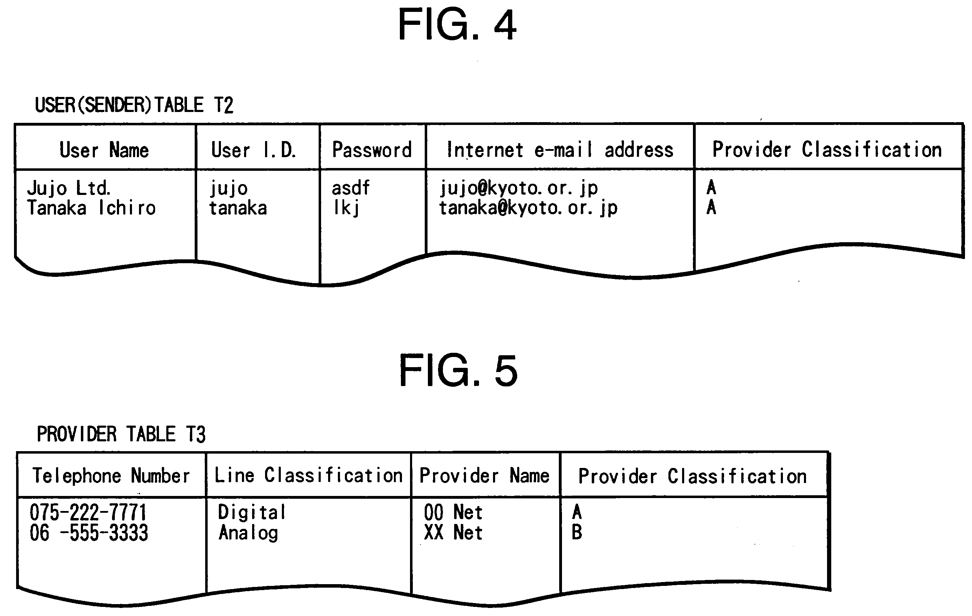

As shown in Fig.4, the user (sender) table T2 records the name of the user of the communication terminal device T of the present invention, his/her internet e-mail address, the provider classification and the user ID and password for logging on to the internet. It should be noted that when a plurality of users use a common single communication terminal device in an office or the like, registering of each user and selecting a particular user name at times of transmission is possible.

As shown in Fig.5, the provider table T3 memorizes the telephone number of the provider to be used when connecting to the internet, the line classification (analog or digital), the provider name and the provider classification. The provider classification corresponds to the provider classification of user table T2 and is for discriminating the log in procedures that differ for each provider. When a single provider has a plurality of telephone lines or when a plurality of providers are to be used, each of those telephone numbers may be registered and selected at times of transmission.

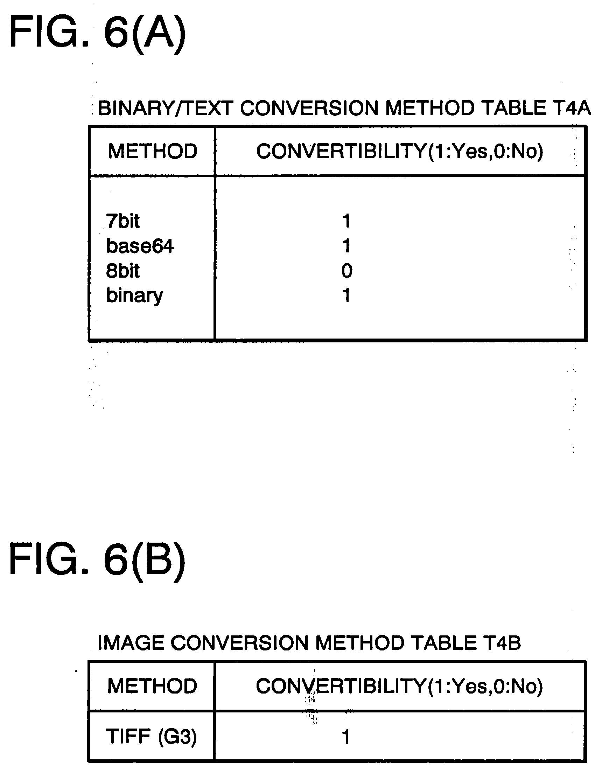

As shown in Fig.6(A), the binary text conversion method table T4A memorizes a "1" against those conversion methods which the binary/text converter 23 is able to process and memorizes "0" against those which the binary/text converter 23 cannot process. In the given example, "7 bit", "base 64" and "binary" may be processed while "8 bit" can not be processed.

Furthermore, as shown in Fig.6(B), the image conversion method table T4B memorizes a "1" against those conversion methods which the image converter 22 is able to process and memorizes a "0" against those which the image converter 22 cannot process. In the given example, only "TIFF(G3)" may be processed.

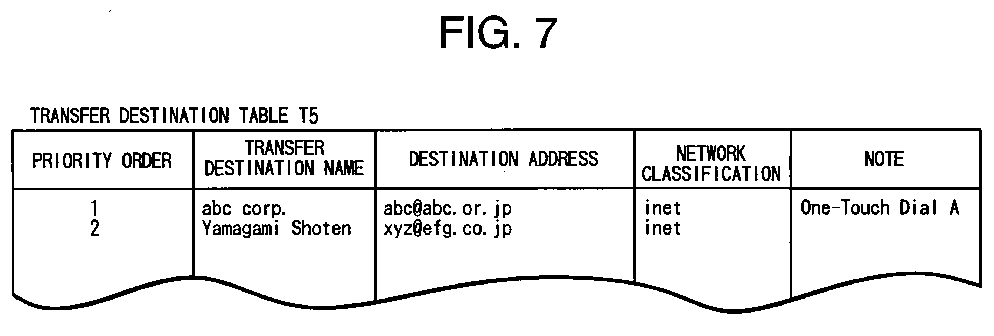

As shown in Fig.7, the transfer destination table T5 memorizes the internet e-mail address to which, when the communication terminal device of the present invention receives electronic mail which it can not process, the electronic mail is to be transferred. Furthermore, the order of priority of the transfer destination is also specified.

Next, the procedures when electronic mail is sent to the internet will be described. The protocol used at each layer of the OSI reference model are shown in the table below.

**Table 1**

| | |
|---|---|
| Layer 7 (Application Layer) | Transmission : SMTP (Simple Mail Transfer Protocol) |
| Layer 6 (Presentation Layer) | |
| Layer 5 (Session Layer) | Reception : POP(Post Office Protocol) |
| Layer 4 (Transport Layer) | TCP (Transmission Control Protocol) |
| Layer 3 (Network Layer) | IP(Internet Protocol) |
| Layer 2 (Data Link Layer) | V.34 (Analog Lines) etc. |
| Layer 1 (Physical Layer) | X.25 (Digital Lines) etc. |

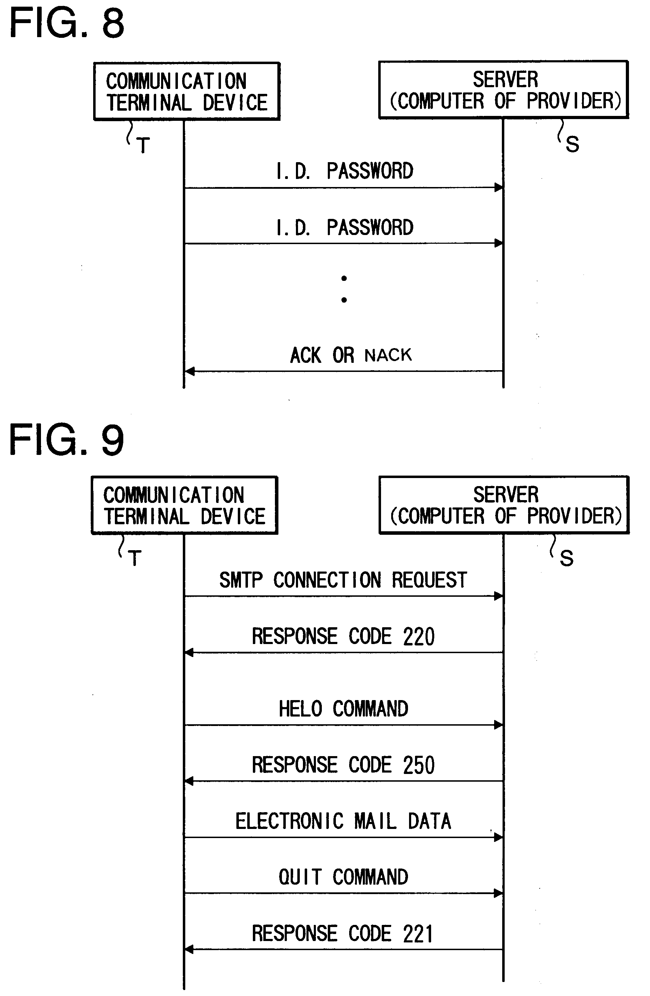

Firstly, the log in procedures will be described. When a line is established to the computer of the provider (hereafter known as server S) as shown in the time chart of Fig.8, the communication terminal device T of the present invention continues transmitting the user ID and password in accordance with the PAP (Password Authentication Protocol) until an Ack or Nack is received from the server S. When Nack is received from the server S, the communication terminal device T of the present invention disconnects the lines and thereafter re-dials. Conversely, when Ack is received from the server S, the log in of the communication terminal device T of the present invention to the server S is completed.

After completion of log in to the server S, as shown in the time chart of Fig.9, the communication terminal device T of the present invention transmits electronic mail by, for example, SMTP (Simple Mail Transfer Protocol) being a standard protocol used when carrying out the communication of electronic mail on the internet.

Firstly, the communication terminal device T of the present invention makes a request for SMTP connection to the server S. If connection is possible, the server S sends a response code 220 to the communication terminal device T of the present invention. Then, the communication terminal device T of the present invention transmits its own domain name by a "HELO" command. In response to this, if the server S is able to recognize the domain name of the communication terminal device T of the present invention, it sends a response code 250 and the domain name of itself(the server S). Thereafter, the communication terminal device T of the present invention starts the transmission of electronic mail. When the transmission of electronic mail is complete, the communication terminal device T of the present invention transmits a "QUIT" command. When the server S replies with response code 221 in response to this, the SMTP is completed. After completion of transmission of electronic mail, log off from the server S is performed and the lines are disconnected.

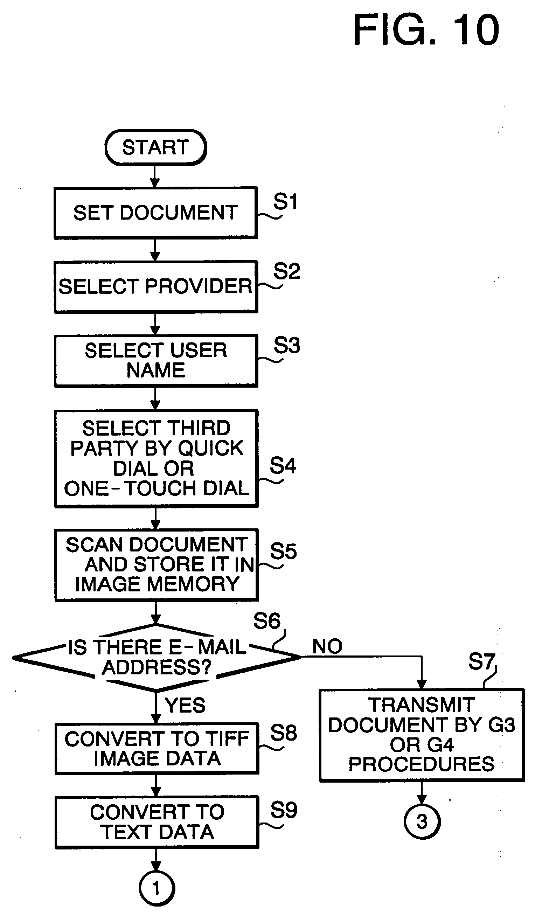

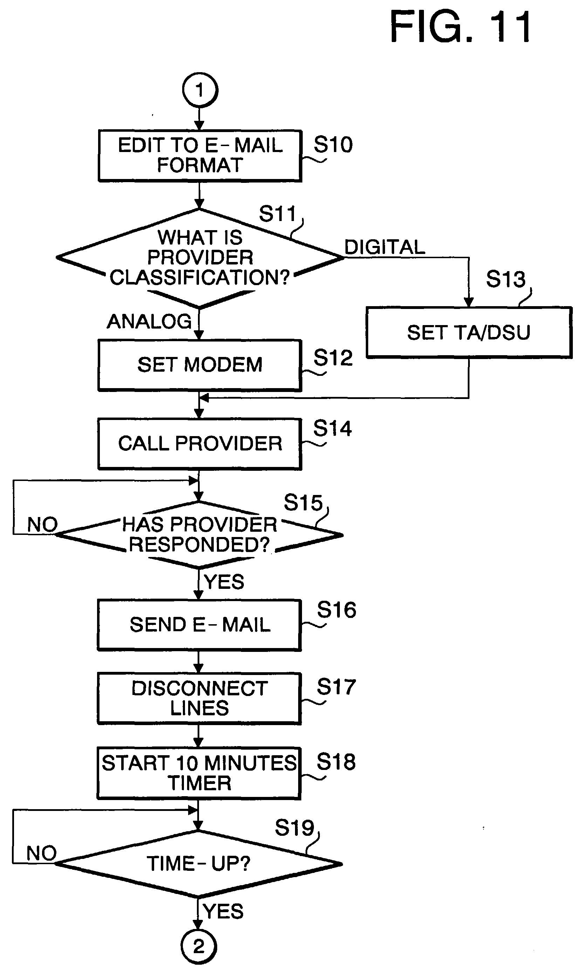

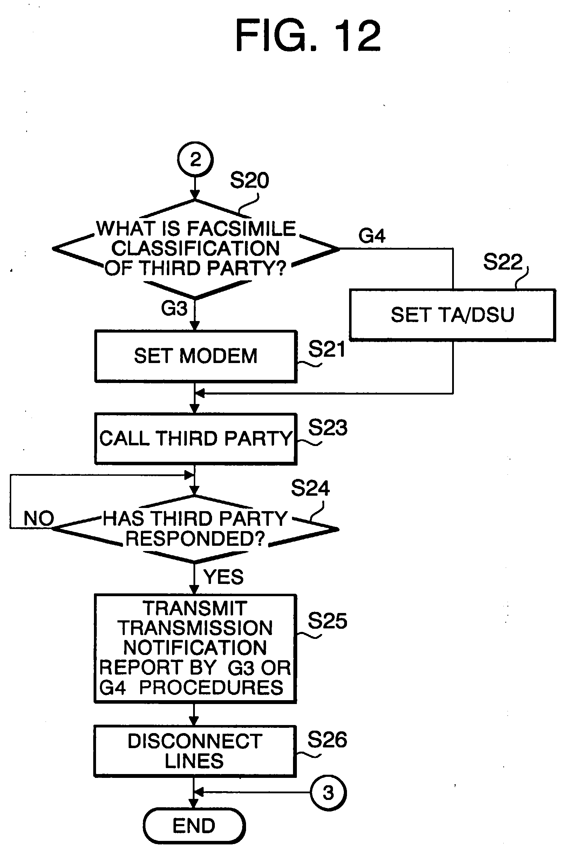

Next, the operations of the communication terminal device T of the present invention when electronic mail is transmitted will be described with reference to the flow chart shown in Figs.10 through 12.

Firstly, a document that the user is to transmit is set on the document table (not shown) of the communication terminal device T of the present invention (step S1) and the provider or lines to be used are selected from the table T3 by an operation of the keys or the like of the operation part 5 (step S2). Furthermore, the user himself/herself enters the passcode for selecting the registered user name and selects the user name from the table T2 (step S3). The reason why the user is identified by a passcode is to prevent use by an unauthorized user. This passcode may also be used as the password for connection to the internet. Next, the user either presses the start key (not shown) after choosing the short dial number of the third party or selects the third party from table T1 by pressing the one-touch key (step S4).

The provider or line, user name and third party selected in accordance with the procedure above are temporarily stored in the RAM 7.

The communication terminal device T of the present invention sequentially scans the whole document one page at a time as dot image data, then encodes all the pages by an MMR method at the encoding/decoding part 21 and stores it as G3 format image data in the image memory 8 (step S5). Then, the CPU 1 reads out the third party previously specified by the user by the short dial number or one touch dial and then temporarily being memorized in the RAM 7. Furthermore, the data relating to that third party is read out from the third party table T1.

As a result, when no internet e-mail address is registered in the third party table T1 (step S6), as transmission of electronic mail can not be performed, the CPU 1 carries out a facsimile transmission of the G3 format image data stored in the image memory 8 in the G3 format after conversion to an analog voice signal or in G4 format by a digital signal conversion(step S7). If an internet e-mail address is registered, the CPU 1 performs processing as described below in order to transmit the G3 format image data as electronic mail.

As G3 format image data can not be transmitted directly to the internet, it is converted to an electronic mail format as described below (step S8). Firstly, TIFF converter 22 attaches a TIFF Class F header information to the start of the G3 format image data and produces TIFF image data. As this TIFF image data is binary data, the binary/text converter 23 converts this to text data (step S9).

Furthermore, the mail editor 24 attaches an electronic mail header to the TIFF image data converted to text data (step S10). At least "From:", "To:" and "Subject:" are included in this header as shown in Fig.13. The internet e-mail address of the user selected from the user table T2 at step S3 is set in "From:", the internet e-mail address of the third party selected from the third party table T1 at step S4 is set in "To:" and "TIFF (G3)" indicating that it is electronic mail including TIFF format image data is set in "Subject:". Furthermore, "base 64" indicating the binary/text conversion method is set in "Content-transfer-Encoding".

In this way, when the data in the electronic mail format is completed, the CPU 1 performs a dial up connection to the internet. Firstly, the CPU 1 determines the classification (analog/digital) of the lines of the provider selected at step S2 from the provider table T3 (step S11), sets the modem 10 when the lines are analog (step S12), sets the TA/DSU 9 when the lines are digital (step S13), calls the telephone number of the selected provider (step S14) and waits for a response (step S15).

When a line has been established with the provider, the CPU 1 logs-in in accordance with the aforementioned PAP, transmits the electronic mail by SMTP, logs off after the completion of transmission (step S16) and disconnects the lines (step S17).

Thereafter, the CPU 1 starts a 10 minute timer (step S18) and waits (step S19). After 10 minutes have elapsed, the CPU 1 reads out the classification (G3/G4) and facsimile number of the third party selected at step S4 from the third party table T1 (step S20), sets the modem 10 when it is G3 and the TA/DSU 9 when it is G4 (steps S21, S22) and calls (step S23). After a response is received from the third party facsimile device (step S24), the CPU 1 transmits a transmission report of which one example is shown in Fig.14 by either G3 or G4 procedures (step S25) and disconnects the lines (step S26).

The transmission report shown in Fig.14 will be described hereafter. The format of this transmission report is pre-registered in the ROM 6. The transmission time (Year, Month, Date, a.m./p.m. Hour, Minute), destination, transmission source, a short statement notifying that electronic mail has been sent (or will be sent), information relating to the electronic mail which has been sent (or will be sent) and part of the image data which has been sent (or will be sent) are indicated.

The transmission date and time, destination, transmission source, data type, number of pages and data volume are indicated in the information relating to the electronic mail. The transmission date and time are automatically indicated by the clock provided in the communication terminal device T of the present invention. The destination is indicated as the internet e-mail address of the third party selected from the third party table T1 being the "To:" part of the electronic mail header. The transmission source is indicated as the internet e-mail address of the user selected from the user table T2 being the "From:" part of the electronic mail header. The data type is indicated as "TIFF (G3)" being the "Subject:" part of the electronic mail header. Furthermore, the number of pages corresponds to the number of pages of the document and the data volume corresponds to the volume of data after conversion to TIFF image data.

In the aforementioned embodiment, after transmitting the image data of a document or the like as electronic mail to the internet, notification is performed by G3 or G4 facsimile communication after a predetermined time period has elapsed (in the embodiment, 10 minutes). Accordingly, when the recipient receives the facsimile, quick reception of the electronic mail by the predetermined procedures is possible as a certain amount of time has already elapsed since the sender transmitted the electronic mail to the internet. This predetermined time period may be suitably set corresponding to the state of the recipient, the state of the lines and the like. Furthermore, as the binary data is converted to text data, electronic mail can be reliably transmitted.

It should be noted that not only the aforementioned embodiment, but another embodiment is also possible in which transmission of electronic mail to the internet occurs after notification by facsimile of the transmission of electronic mail to the internet. In this case, there is a possibility that the electronic mail has not been delivered to the recipient's server when the recipient attempts to receive the electronic mail. However, the recipient is able to quickly know that the sender has transmitted electronic mail.

Furthermore, the communication terminal device T of the present invention may be arranged such that the transmission of electronic mail to the internet and the notification by facsimile be carried out in parallel. In this case, as it is necessary to use two telephone lines simultaneously, the digital lines L1 are used for the transmission of electronic mail and the analog lines L2 are used for facsimile transmission (however, this is limited to G3 format transmission). Accordingly, by performing transmission of electronic mail to the internet and the notification by facsimile in parallel, the processing time of the entire procedure may be shortened.

Yet further, the transmission to the internet of image data other than bilevel image data such as grey scale or color as electronic mail is of course possible. Further, the same applied for data other than image data such as voice or moving images.

Yet further still, the present invention is also effective when applied to the computer communication network other than the internet such as an in-office LAN or the like.

Incidentally, electronic mail transmitted as described above to the internet from the communication terminal device T of the present invention can be received if the receiver side communication terminal device has a similar arrangement to the communication terminal device T of the present invention. Rephrased, if the communication terminal device T of the present invention receives electronic mail which a communication terminal device having a similar arrangement has transmitted by converting the TIFF image data to text data, it (T) is able to convert that text data back to TIFF image data and furthermore return it to the original dot image data. However, the electronic mail which may be processed by the communication terminal device T of the present invention is only that which has been processed according to one of the methods recorded as "1" in the binary text conversion method table T4A and image conversion method table T4B.

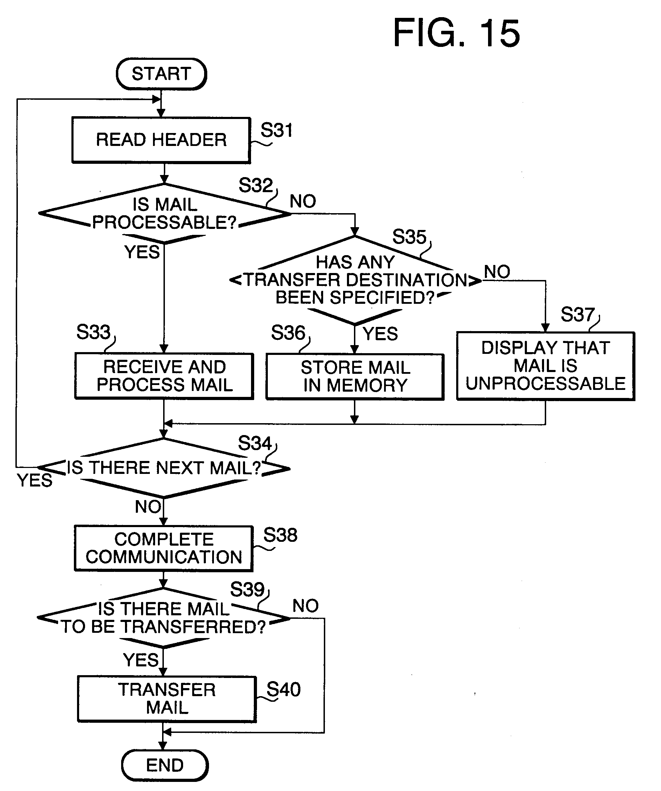

In short, the communication terminal device T of the present invention is able to receive electronic mail while identifying electronic mail which it cannot process. Hereafter, the processing procedures at that time will be described with reference to the flowchart of Fig.15.

When electronic mail is received, the CPU 1 of the communication terminal device T of the present invention determines the header part and the main mail part sent to the mail editor 24, then reads out the header and sends it to the encoding format determination part 26 (step S31). Then, as "TIFF (G3)" is indicated in the "Subject:" part of the header if the electronic mail has been sent from a communication device of similar construction to the communication terminal device T of the present invention, a determination of whether processing is possible or not can be performed by the encoding method determination part 26 by reference to the contents of the image conversion method table T4B. Furthermore, as "base 64" is indicated in the "Content-Transfer-Encoding" part, a determination of whether processing is possible or not can be performed by the encoding method determination part 26 by reference to the contents of the binary/text conversion method table T4A (step S32). Accordingly, in this case, the CPU1 of the communication terminal device T of the present invention performs a series of processing whereby it receives the electronic mail, converts the text data to binary data by the binary text converter 23, converts the binary data to G3 format image data in the image converter 22 and stores the G3 format image date in the image memory 8 (step S33).

If there is other electronic mail transmitted, the processing returns to step S31 and processing as above is performed (step S34) and if there is no further mail, communication is concluded (step S38). Then, the G3 format image data stored in the image memory 8 is sent to the encoding/decoding part 21 after communication has been completed, decoded by the part 21, converted to bilevel dot image data and output from the recording part 3 as hard copy.

On the other hand, when it is determined by the encoding method determination part 26 at step S31 that the received electronic mail is of a data format which can not be processed by the communication terminal device T of the present invention, it is determined from the contents of the transfer destination table T5 whether another communication terminal device such as a computer or the like to which that unprocessable electronic mail is to be sent has been pre-specified (step S35), and when such a specification has been made, that electronic mail is stored in that state in the RAM 7 (step S36). It should be noted that, when no such specification as above has been made, the fact that electronic mail has been received but can not be processed is memorized in the RAM 7 and the information such as "Unprocessable mail has been received" is displayed in the display 4 (step S37).

Further, it is preferable to prepare a list such as an "Unprocessable mail list" in the RAM 7 and to record the header part of the electronic mail which could not be processed in the rows of the list.

Thereafter, once communication has been completed (step S38), when electronic mail for which transfer has been specified is stored in the RAM 7 (step S39), that electronic mail is transferred to the pre-registered communication terminal device (step S40). The processing of this transfer is similar to normal electronic mail transmission processing.

Accordingly, when the communication terminal device T of the present invention receives electronic mail of a data format which it(T) cannot process by itself, it(T) can send that mail to a pre-specified other communication terminal device such as a computer or the like and thus can process the data by the pre-specified transfer destination communication terminal device and output the result as a display or hard copy.

It should be noted that when electronic mail of an extremely specific data format is received, it is of course possible to search through the internet for a computer which is able to process that data format and request the processing of the data to such a computer.

Furthermore, in the abovementioned embodiment, G3 and G4 formats have been given as examples of facsimile communication but it is not limited to these and naturally, facsimile communication of other formats may be used.

As described above, the communication terminal device T of the present invention determines whether received electronic mail may be processed and the original contents can be displayed or not based on information included in the header part of the electronic mail. Thus, when the image data transmitted/received by normal facsimile communication is converted to electronic mail format data and transmitted/received via computer communication network, if the communication terminal device T of the present invention receives electronic mail of an encoding format which can be received but not processed, the device makes such determination as above after it once received the data and then may transfer the data to other computers etc. for further processing.

## Claims

1. A communication terminal device characterized in that it comprises:
reception means for receiving electronic mail, the electronic mail having an encoded main part and a header part including information relating to that encoding;
determination means(26) for determining whether decoding of the main part of the electronic mail is possible based on the header information of the electronic mail received by the reception means; and
notification means for notifying that the main part cannot be decoded when the determination means has determined as such.

2. A communication terminal device characterized in that it comprises:
reception means for receiving electronic mail, the electronic mail having an encoded main part and a header part including information relating to that encoding;
determination means(26) for determining whether decoding of the main part of the electronic mail is possible based on the header information of the electronic mail received by the reception means;
first memory means(7) for memorizing the received electronic mail;
second memory means(T5) for memorizing a predetermined transfer destination; and
transfer means for transferring electronic mail memorized in the first memory means(7) to the transfer destination memorized in the second memory means(T5) when it is determined by the determination means(26) that the main part can not be decoded.

3. The communication terminal device as in claim 1 or 2, wherein the encoded main part of the electronic mail includes facsimile image data.

4. The communication terminal device as in claim 2, further including search means for, when the determination means(26) determines the main part of the received electronic mail to be unprocessable, searching through available network for a terminal device which is able to process the main part of that electronic mail and requesting further processing of the electronic mail to that terminal device.

5. The communication terminal device as in claim 4, wherein the transfer means may transfer the electronic mail memorized in the first memory means(7) to the terminal device discovered by the search means.
